# EUROPEAN PATENT APPLICATION

(11) **EP 4 593 326 A1**
(43) Date of publication of application: **30.07.2025**
(21) Application number: 23881772.0
(22) Date of filing: 23.10.2023
(51) Int. Cl.: H04L 9/32, G06F 9/54

(54) **COMMUNICATION METHOD AND APPARATUS, AND INTELLIGENT DRIVING DEVICE**

(30) Priority: 28.10.2022 CN 202211335882
(71) Applicant: Shenzhen Yinwang Intelligent Technologies Co., Ltd., Shenzhen, Guangdong 518129 (CN)
(72) Inventor: ZHOU, Guangyu, Shenzhen, Guangdong 518129 (CN); CAO, Jianlong, Shenzhen, Guangdong 518129 (CN)
(74) Representative: Pfenning, Meinig & Partner mbB
(86) International application number: PCT/CN2023/125866
(87) International publication number: WO 2024/088194

(57) **Abstract**

Embodiments of this application provide a communication method and apparatus, and an intelligent driving device. The method includes: allocating, in a kernel, a first memory to a first process, where the first memory includes a memory used to carry identity information of the first process; filling the identity information of the first process into the first memory; and mapping the first memory to obtain a shared memory, so that a second process obtains the identity information of the first process by using the shared memory. Embodiments of this application may be applied to an intelligent vehicle or an electric vehicle, to help reduce an inter-process communication delay, and also help improve communication efficiency and certainty.

## Description

### TECHNICAL FIELD

This application relates to the communication field, and more specifically, to a communication method and apparatus, and an intelligent driving device.

### BACKGROUND

Compared with conventional fuel vehicles, intelligent connected vehicles need to face attackers from the entire internet. This brings a great challenge to vehicle practitioners, especially vehicle software practitioners. In the autonomous driving field, vehicle software practitioners need to cope with new security issues brought by intelligence. An autonomous driving platform can ensure safe driving of a user only when a digital security problem is resolved.

Generally, secure communication refers to secure network communication or communication between electronic control units (electronic control units, ECUs). However, when a vehicle actually runs, due to service-based deployment and a microkernel development trend of an operating system, how to perform efficient and secure communication between processes becomes an urgent problem to be resolved.

### SUMMARY

Embodiments of this application provide a communication method and apparatus, to help improve efficiency and security of communication between processes.

An intelligent driving device in this application may include a road vehicle, a water vehicle, an air vehicle, an industrial device, an agricultural device, an entertainment device, or the like. For example, the intelligent driving device may be a vehicle. The vehicle is a vehicle in a broad sense, and may be a transportation means (like a commercial vehicle, a passenger vehicle, a motorcycle, a flight vehicle, or a train), an industrial vehicle (like a forklift, a trailer, or a tractor), an engineering vehicle (like an excavator, a bulldozer, or a crane), an agricultural device (like a lawn mower or a harvester), a recreation device, a toy vehicle, or the like. A type of the intelligent driving device is not specifically limited in embodiments of this application. For another example, the intelligent driving device may be a transportation means like an airplane or a ship.

According to a first aspect, a communication method is provided. The method includes: allocating, in a kernel, a first memory to a first process, where the first memory includes a memory used to carry identity information of the first process; filling the identity information of the first process into the first memory; and mapping the first memory to obtain a shared memory, so that a second process obtains the identity information of the first process by using the shared memory.

In this embodiment of this application, the shared memory is mapped by the kernel to a user-space process for use. A receiver process (the second process) may obtain identity information of an initiator process by using the shared memory. In this way, the receiver process does not need to be trapped into the kernel again to obtain the identity information of the transmitter process (the first process). This helps reduce an inter-process communication delay, and also helps improve communication efficiency and certainty.

In some possible implementations, the mapping the first memory to obtain a shared memory includes: mapping the first memory from the kernel to a user mode, to obtain the shared memory.

In some possible implementations, the first process may be a client process or an initiator process.

In some possible implementations, the second process may be a server process or a receiver process.

With reference to the first aspect, in some implementations of the first aspect, the identity information of the first process includes service-based identity information of the first process.

Because the vehicle-mounted scenario involves a plurality of types of operating systems and a multi-component vehicle identity system, abstract identity information (for example, a user identity (user identity, UID), a group identity (group identity, GID), or a process identity (process identity, PID)) cannot completely reflect identity information of a process in the vehicle-mounted scenario. In this embodiment of this application, the second process may obtain the service-based identity information of the first process, and the service-based identity information of the first process can better reflect the identity information of the process in the vehicle-mounted scenario.

In some possible implementations, the service-based identity information of the first process includes but is not limited to vehicle unique identification information used to define the first process (for example, an application). For example, the service-based identity information of the first process may include deployment information of the first process (for example, identification information of an ECU in which the application is located).

With reference to the first aspect, in some implementations of the first aspect, the kernel stores a mapping relationship between abstract identity information of the first process and the service-based identity information of the first process. The method further includes: obtaining the abstract identity information of the first process; and determining the service-based identity information of the first process based on the abstract identity information of the first process and the mapping relationship.

In this embodiment of this application, the kernel stores the mapping relationship between the abstract identity information of the first process and the service-based identity information of the first process. When the first process is started, the kernel may obtain the abstract identity information of the first process, so as to determine the service-based identity information of the first process based on the abstract identity information and the mapping relationship. Therefore, the service-based identity information of the first process may be filled into the first memory. After memory mapping is performed, the second process may obtain the service-based identity information of the first process from the shared memory. In this way, the second process does not need to obtain the service-based identity information of the first process by using an execution management module EM, to help reduce an inter-process communication delay.

In some possible implementations, the obtaining abstract identity information of the first process includes: when the first process is started, obtaining the abstract identity information of the first process.

With reference to the first aspect, in some implementations of the first aspect, the method further includes: cleaning the mapping relationship when the first process exits.

In this embodiment of this application, when the first process exits, the mapping relationship stored in the kernel may be cleaned, to help avoid leakage of the identity information of the first process.

With reference to the first aspect, in some implementations of the first aspect, the method further includes: controlling visibility of the first process and the second process to the first memory based on attribute information of a virtual address page table.

In this embodiment of this application, visibility of the first process and the second process to the first memory may be controlled based on the attribute information of the virtual address page table. In this way, a strict unidirectional zero trust model can be implemented between two communication ends, and this helps improve security of an identity information transfer mechanism.

With reference to the first aspect, in some implementations of the first aspect, the controlling visibility of the first process and the second process to the first memory based on attribute information of a virtual address page table includes: controlling, based on the attribute information of the virtual address page table, the first process to be invisible to the first memory and the second process to be readable and unwritable to the first memory.

In this embodiment of this application, the identity information of the first process can be protected by controlling the first process to be invisible to the first memory and controlling the second process to be readable and unwritable to the first memory, to help improve the security of the identity information transfer mechanism.

With reference to the first aspect, in some implementations of the first aspect, the first memory further includes a memory used to carry payload data of the first process. The method further includes: filling the payload data in the shared memory, so that the second process obtains the payload data by using the shared memory.

In this embodiment of this application, a memory used to carry the identity information and a memory used to carry the payload data may be allocated at a time, and the memory used to carry the identity information may be filled at a time during allocation. This helps reduce impact of the identity information transfer mechanism on performance in entire communication.

The memory used to carry the identity information of the first process is decoupled from the memory used to carry the payload data of the first process, so that the first memory can have a fixed length and the memory used to carry the payload data can implement zero copy in a mapping process, to help further reduce an inter-process communication delay.

With reference to the first aspect, in some implementations of the first aspect, the second process obtains the identity information of the first process based on a pointer address offset.

In some possible implementations, a length of the memory that is in the first memory and that is used to carry the identity information is a preset length.

In this embodiment of this application, the length of the memory used to carry the identity information may be the preset length. In this way, the receiver process may quickly obtain the identity information of the first process based on the pointer address offset.

According to a second aspect, a communication apparatus is provided. The communication apparatus includes: a memory allocation unit, configured to allocate, in a kernel, a first memory to a first process, where the first memory includes a memory used to carry identity information of the first process; a data filling unit, configured to fill the identity information of the first process into the first memory; and a data mapping unit, configured to map the first memory to obtain a shared memory, so that a second process obtains the identity information of the first process by using the shared memory.

With reference to the second aspect, in some implementations of the second aspect, the identity information of the first process includes service-based identity information of the first process.

With reference to the second aspect, in some implementations of the second aspect, the kernel stores a mapping relationship between abstract identity information of the first process and the service-based identity information of the first process. The apparatus further includes: an obtaining unit, configured to obtain the abstract identity information of the first process; and a determining unit, configured to determine the service-based identity information of the first process based on the abstract identity information of the first process and the mapping relationship.

With reference to the second aspect, in some implementations of the second aspect, the apparatus further includes: a data cleaning unit, configured to clean the mapping relationship when the first process exits.

With reference to the second aspect, in some implementations of the second aspect, the apparatus further includes: a control unit, configured to control visibility of the first process and the second process to the first memory based on attribute information of a virtual address page table.

With reference to the second aspect, in some implementations of the second aspect, the control unit is configured to: control, based on the attribute information of the virtual address page table, the first process to be invisible to the first memory and the second process to be readable and unwritable to the first memory.

With reference to the second aspect, in some implementations of the second aspect, the first memory further includes a memory used to carry payload data of the first process. The data filling unit is further configured to fill the payload data in the shared memory, so that the second process obtains the payload data by using the shared memory.

With reference to the second aspect, in some implementations of the second aspect, the second process obtains the identity information of the first process based on a pointer address offset.

According to a third aspect, a communication apparatus is provided. The communication apparatus includes a processing unit and a storage unit. The storage unit is configured to store instructions, and the processing unit executes the instructions stored in the storage unit, so that the apparatus performs any possible method in the first aspect.

According to a fourth aspect, an intelligent driving device is provided. The intelligent driving device includes any possible apparatus in the second aspect or the third aspect.

In some possible implementations, the intelligent driving device is a vehicle.

According to a fifth aspect, a computer program product is provided. The computer program product includes computer program code, and when the computer program code is run on a computer, the computer is enabled to perform any possible method in the first aspect.

It should be noted that all or some of the computer program code may be stored in a first storage medium. The first storage medium may be encapsulated with the processor, or may be encapsulated separately with the processor. This is not specifically limited in this embodiment of this application.

According to a sixth aspect, a computer-readable medium is provided. The computer-readable medium stores program code, and when the computer program code is run on a computer, the computer is enabled to perform any possible method in the first aspect.

According to a seventh aspect, an embodiment of this application provides a chip system. The chip system includes a processor, configured to invoke a computer program or computer instructions stored in a memory, so that the processor performs any possible method in the first aspect.

With reference to the seventh aspect, in a possible implementation, the processor is coupled to the memory through an interface.

With reference to the seventh aspect, in a possible implementation, the chip system further includes a memory, and the memory stores the computer program or the computer instructions.

According to an eighth aspect, an embodiment of this application provides a chip, where the chip includes a circuit, and the circuit is configured to perform any possible method in the first aspect.

### BRIEF DESCRIPTION OF DRAWINGS

FIG. 1 is a functional block diagram of an intelligent driving device according to an embodiment of this application;
FIG. 2A and FIG. 2B are a diagram of an access control architecture of an in-vehicle system according to an embodiment of this application;
FIG. 3 is a block diagram of an operating system according to an embodiment of this application;
FIG. 4 is a schematic flowchart of a communication method according to an embodiment of this application;
FIG. 5 is another schematic flowchart of a communication method according to an embodiment of this application;
FIG. 6 is a diagram of secure inter-process communication according to an embodiment of this application;
FIG. 7 is a diagram of calling service-based identity information stored in an identity management module according to an embodiment of this application;
FIG. 8 is a diagram in which an inter-process communication IPC driver controls visibility of processes at two ends to an identity data memory according to an embodiment of this application;
FIG. 9 is a diagram in which a receiver process obtains identity information of an initiator process based on a pointer address offset according to an embodiment of this application; and
FIG. 10 is a block diagram of a communication apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The prefix words "first", "second", and the like in embodiments of this application are merely intended to distinguish between different objects, and impose no limitation on locations, sequences, priorities, quantities, content, or the like of the described objects. In embodiments of this application, use of a prefix word, like an ordinal number, used to distinguish between described objects does not constitute a limitation on the described objects. For descriptions of the described objects, refer to the context descriptions in the claims or embodiments, and use of the prefix words should not constitute a redundant limitation. In addition, in the descriptions of embodiments, unless otherwise specified, "a plurality of" means two or more.

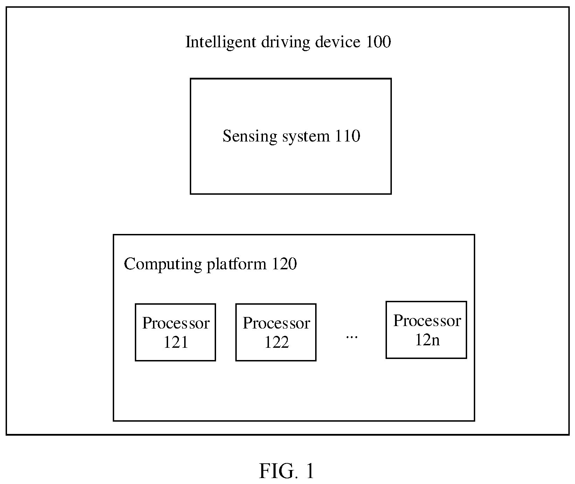

FIG. 1 is a functional block diagram of an intelligent driving device 100 according to an embodiment of this application. The intelligent driving device 100 may include a sensing system 110 and a computing platform 120. The sensing system 110 may include one or more sensors that sense information about an environment around the intelligent driving device 100. For example, the sensing system 110 may include a positioning system. The positioning system may be a global positioning system (global positioning system, GPS), a BeiDou system, or another positioning system. The sensing system 110 may alternatively include one or more of an inertial measurement unit (inertial measurement unit, IMU), a lidar, a millimeter-wave radar, an ultrasonic radar, and a camera apparatus.

Some or all functions of the intelligent driving device 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

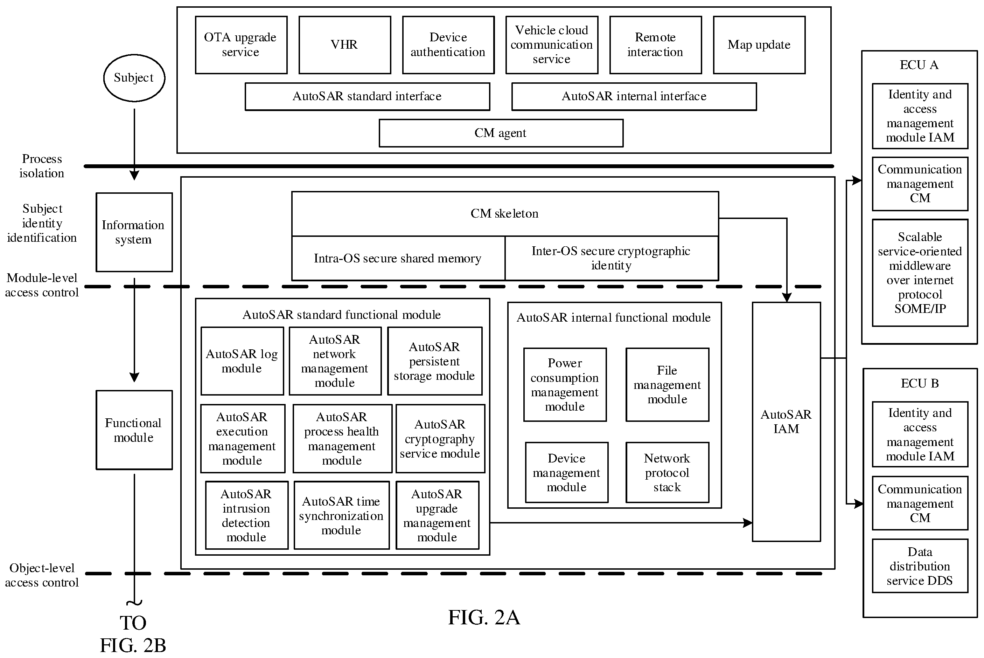

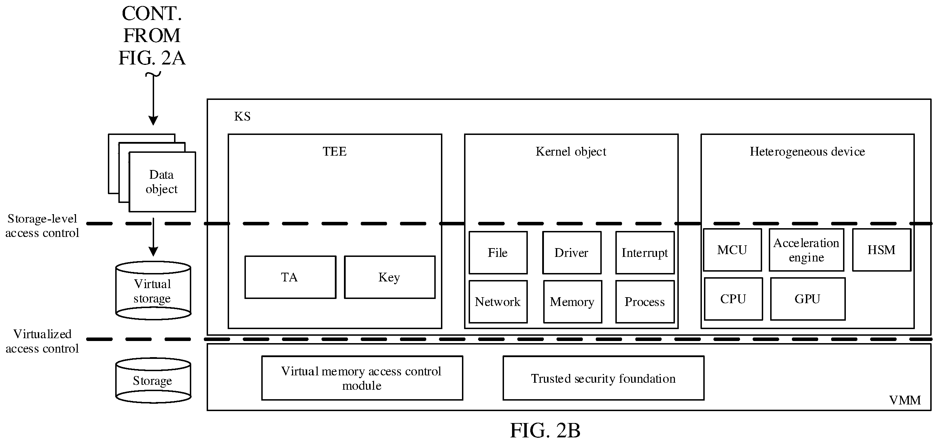

FIG. 2A and FIG. 2B are a diagram of an access control architecture of an in-vehicle system according to an embodiment of this application. As shown in FIG. 2A and FIG. 2B, the access control architecture of the in-vehicle system includes a subject, an information system, a functional model, a kernel service (kernel service, KS), and a virtual memory manager (virtual memory manager, VMM). The subject includes an over the air (over the air, OTA) upgrade service, a vehicle history record (vehicle history record, VHR), device authentication, a vehicle-cloud communication service, a remote interaction, map update, an automotive open system architecture (AUTomotive open system architecture, AutoSAR) standard interface, an AutoSAR internal interface, and a communication management (communication management, CM) agent. The information system includes a CM skeleton (CM skeleton), an intra-operating system (operating system, OS) secure shared memory, and an inter-operating system secure cryptographic identity. Functional modules include an AutoSAR standard functional module (AutoSAR native function cluster) and an AutoSAR internal functional module (AutoSAR function cluster). The AutoSAR standard functional module includes an AutoSAR log module, an AutoSAR network management module, an AutoSAR persistent storage module, an AutoSAR execution management module (AutoSAR execution management, AutoSAR EM), an AutoSAR process health management module, an AutoSAR cryptography service module, an AutoSAR intrusion detection module, an AutoSAR time synchronization module, an AutoSAR upgrade management module, and the like. The AutoSAR internal functional modules include a power consumption management module, a file management module, a device management module, and a network protocol stack. The KS includes a trusted execution environment (trusted execution environment, TEE), a kernel object (kernel object), and a heterogeneous device. The TEE includes a trusted application (trusted application, TA), a key, and the like. The kernel object includes files, a driver, an interrupt, a network, a memory, a process, and the like. The heterogeneous device includes a microcontroller unit (microcontroller unit, MCU), an acceleration engine, a hardware security module (hardware security module, HSM), a CPU, a GPU, and the like. The VMM includes a virtual memory access control (virtual memory access control) module and a trusted security foundation. The CM skeleton is used to query a permission of an AutoSAR identity and access management (AutoSAR identity and access management, AutoSAR IAM) module, and the AutoSAR standard functional module is used to query an AutoSAR IAM fine-grained access permission (for example, a keyslot (keyslot)). The AutoSAR IAM can communicate with an ECU A and an ECU B separately.

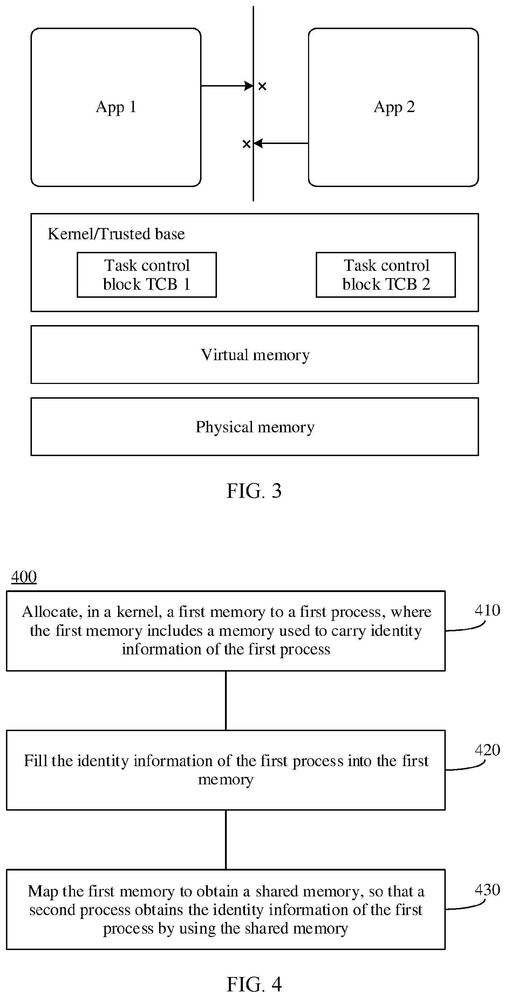

FIG. 3 is a block diagram of an operating system 300 according to an embodiment of this application. As shown in FIG. 3, the operating system 300 may include a plurality of user-space processes (for example, an application (application, app) 1 and an app 2), a kernel (kernel)/trusted base, a virtual memory, and a physical memory. For example, the app 1 may be used as a client process (or an initiator process), and the app 2 may be used as a server process (or a receiver process). Generally, two processes in an operating system are isolated from each other, and one process cannot directly access a memory address of the other process.

It should be understood that the operating system 300 shown in FIG. 3 may be located on the computing platform 120 shown in FIG. 1.

Generally, a system service or middleware of the operating system is built in user mode. The kernel cannot be excessively bloated. Otherwise, an attack surface increases and reliability and stability deteriorate. Therefore, a microkernel architecture is more popular with a mainstream operating system. Inter-process communication (inter-process communication, IPC) becomes a very important communication means in an operating system in which the middleware or many system services is/are built. Performance and security of the IPC become a very important indicator of the operating system.

For example, the server process may obtain abstract identity information (for example, a UID, a GID, or a PID) of the client process by using an inter-process communication manner (Unix domain socket, UDS) provided by a Linux kernel. When identity information is transmitted through the UDS, extra system calling overheads are added. As shown in FIG. 3, the app 2 needs to spend at least one additional system call to obtain abstract identity information of the app 1 from the kernel. This system call affects a delay and certainty of communication.

In addition, an implementation of an IPC usually depends on help of the kernel or the trusted base. In a current solution, obtaining of identity information cannot be integrated with obtaining of payload data, and additional communication or system calling is required to obtain identity information of a corresponding process from the kernel. In addition, in an in-vehicle service-based scenario, transmission of the abstract identity information cannot well reflect a service-based identity of in-vehicle software, thereby bringing difficulties to further implementation of access control.

In this embodiment of this application, mapping of the identity information is constructed by using the software trusted base of the middleware, and is integrated with an inter-process communication framework of the kernel, so that the payload data and the identity information in the IPC can be bound. This helps reduce an inter-process communication delay, and also helps improve communication efficiency and certainty.

FIG. 4 is a schematic flowchart of a communication method 400 according to an embodiment of this application. The method 400 may be performed by the intelligent driving device 100, or the method 400 may be performed by the computing platform 120, or the method 400 may be performed by a system-on-a-chip (system-on-a-chip, SoC) on the computing platform 120, or the method 400 may be performed by a processor on the computing platform 120. The method 400 includes the following steps.

S410: Allocate, in a kernel, a first memory to a first process, where the first memory includes a memory used to carry identity information of the first process.

For example, the first process may be a client process or an initiator process. For example, the first process may be the application 1 in FIG. 3.

Optionally, the method 400 further includes: allocating, in the kernel, a second memory to the first process, where the second memory is a memory used to carry payload data. Before mapping from the kernel to a user mode, the payload data may not be filled in the second memory. In this way, zero copy of the payload data in a mapping process can be implemented, to help reduce an inter-process communication delay.

S420: Fill the identity information of the first process into the first memory.

Optionally, the identity information of the first process may be abstract identity information of the first process.

For example, the abstract identity information of the first process includes but is not limited to one or more of a UID, a GID, or a PID.

Optionally, the identity information of the first process may be service-based identity information of the first process.

For example, the service-based identity information of the first process includes but is not limited to vehicle unique identification information used to define the first process (for example, an application). For example, the service-based identity information of the first process may include deployment information of the first process (for example, identification information of an ECU in which the application is located).

Optionally, the kernel stores a mapping relationship between the abstract identity information of the first process and the service-based identity information of the first process. The method 400 further includes: obtaining the abstract identity information of the first process; and determining the service-based identity information of the first process based on the abstract identity information of the first process and the mapping relationship.

S430: Map the first memory to obtain a shared memory, so that a second process obtains the identity information of the first process by using the shared memory.

For example, the second process may be a server process or a receiver process.

Optionally, the mapping the first memory includes: mapping the first memory from the kernel to the user mode.

Optionally, the method 400 further includes: cleaning the mapping relationship when the first process exits.

In this embodiment of this application, when the first process exits, the mapping relationship stored in the kernel may be cleaned, to help avoid leakage of the identity information of the first process.

Optionally, if the abstract identity information of the first process is filled in the first memory in S410, the second process may obtain the abstract identity information of the first process by using the shared memory. The second process may send the abstract identity information of the first process to an EM. The EM may send the service-based identity information of the first process to the second process based on the abstract identity information of the first process.

Optionally, the method 400 further includes: controlling visibility of the first process and the second process to the first memory based on attribute information of a virtual address page table.

Optionally, the controlling visibility of the first process and the second process to the first memory based on attribute information of a virtual address page table includes: controlling, based on the attribute information of the virtual address page table, the first process to be invisible to the first memory and the second process to be readable and unwritable to the first memory.

In this embodiment of this application, the identity information of the first process can be protected by controlling the first process to be invisible to the first memory and controlling the second process to be readable and unwritable to the first memory, to help improve security of an identity information transfer mechanism.

Optionally, the first memory further includes a memory used to carry payload data of the first process. The method 400 further includes: filling the payload data in the shared memory, so that the second process obtains the payload data by using the shared memory.

Optionally, the first memory includes a third memory and a fourth memory. The third memory is configured to carry the identity information of the first process, and the fourth memory is configured to carry the payload data of the first process. The identity information of the first process may be filled into the third memory, and the payload data of the first process is not filled into the fourth memory. In this way, the shared memory obtained through mapping from the kernel to the user mode includes the identity information of the first process but does not include the payload data of the first process. The first process may fill the payload data of the first process into a memory that is in the shared memory and that is used to carry the payload data of the first process. In this way, zero copy of the payload data in a memory mapping process is implemented.

Optionally, a length of the memory that is in the first memory and that is used to carry the identity information is a preset length.

In this embodiment of this application, the memory used to carry the identity information can be decoupled from the memory used to carry the payload data, so that a fixed length of the memory used to carry the identity information can be implemented, and the second process can quickly obtain the identity information of the first process. This helps improve inter-process communication efficiency, and also helps reduce an inter-process communication delay. In addition, when mapping from the kernel to the user mode is performed, zero copy is implemented for the payload data in the entire process, and this further reduces the inter-process communication delay.

Optionally, the second process obtains the identity information of the first process based on a pointer address offset.

In this embodiment of this application, the memory used to carry the identity information may have a fixed length. In this way, the second process can quickly obtain the identity information of the first process in a pointer address offset manner, to help reduce the inter-process communication delay.

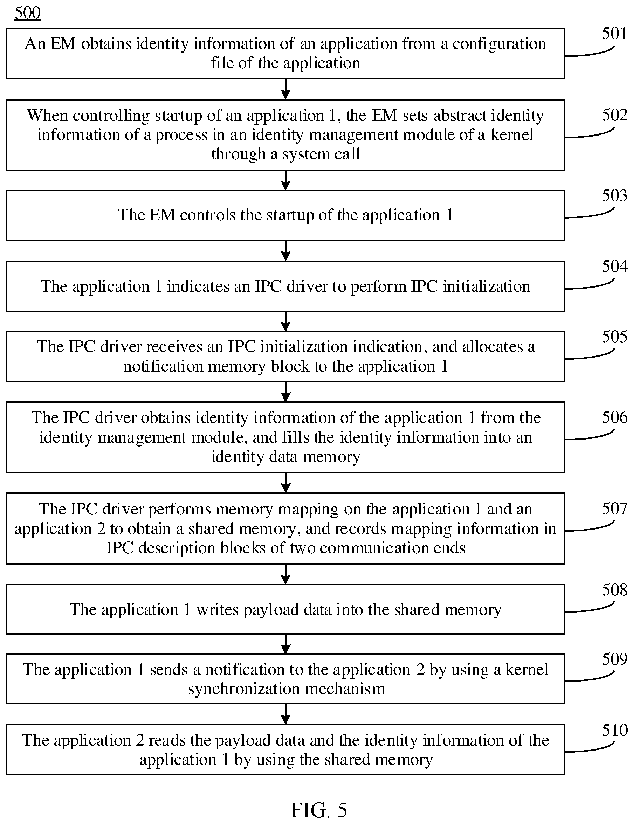

FIG. 5 is a diagram of a communication method 500 according to an embodiment of this application. Data transferred by an IPC once may include two parts, for example, payload data and notification information. The payload data may include information that indicates a memory address of the data, and a receiver process may read the data based on the memory address. The notification information may include identity information of an initiator process. To achieve ultimate communication performance, the payload data can be transferred between processes through a zero-copy mechanism, for example, a shared memory. The transfer of the notification information is usually implemented based on a synchronization mechanism of a kernel, for example, a pipe, a semaphore, or a socket. In this embodiment of this application, the identity information may be transferred along with an inter-process notification.

As shown in FIG. 5, the inter-process communication method 500 provided in this embodiment of this application may include the following steps.

S501: An execution management (execution management, EM) module obtains identity information of an application from a configuration file of the application.

For example, the EM may be the AutoSAR EM shown in FIG. 2A and FIG. 2B. The EM may be configured to provide an environment variable required when the application runs, or may be configured to control resource usage by the application.

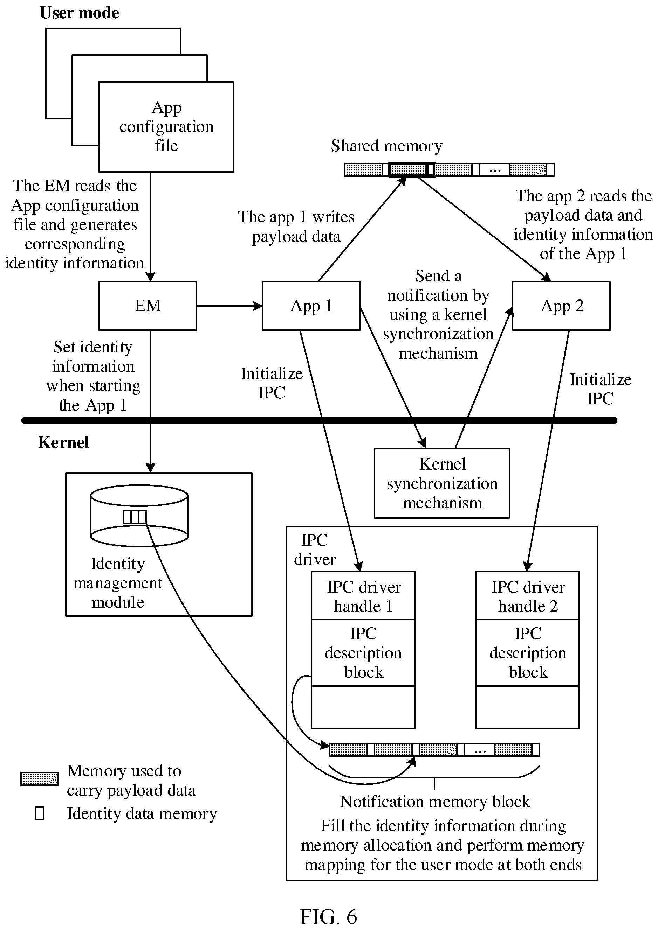

For example, FIG. 6 is a diagram of secure inter-process communication according to an embodiment of this application. A configuration file may be generated when the application is compiled and packaged, and the configuration file may include the identity information of the application.

Optionally, the identity information of the application may include abstract identity information and service-based identity information of the application.

For example, the abstract identity information of the application includes but is not limited to a UID, a GID, or a PID of the application.

In a general-purpose operating system, identity information of a process is generally represented by an ID of the process, namely, a PID. Some operating systems set different UIDs for different processes, and use the UIDs as identity information of the processes. Because a vehicle-mounted scenario involves a plurality of types of operating systems and a multi-component vehicle identity system, neither the PID nor the UID can completely reflect identity information of a process in the vehicle-mounted scenario. The service-based identity information can better reflect the identity information of the process in the vehicle-mounted scenario.

For example, the service-based identity information of the application includes but is not limited to vehicle unique identification information used to define the application. The vehicle unique identification information may be defined based on a requirement of a product. For example, the vehicle unique identification information may include deployment information of the application (for example, identification information of an ECU in which the application is located).

For example, the identification information of the ECU in which the application is located may be a number of the ECU in which the application is located. S502: When controlling startup of an initiator process (an application 1), the EM sets abstract identity information of the process in an identity management module of the kernel through a system call.

In the vehicle-mounted scenario, a client process and a server process can be started by the EM. There is a parent-child relationship between the EM and the client process and between the EM and the server process. Therefore, the EM has service-based identity information of all processes. The service-based identity information is actually identity information statically configured by a user. Finally, the service-based identity information is injected by the EM into an identity management module in a kernel with a higher security level for storage.

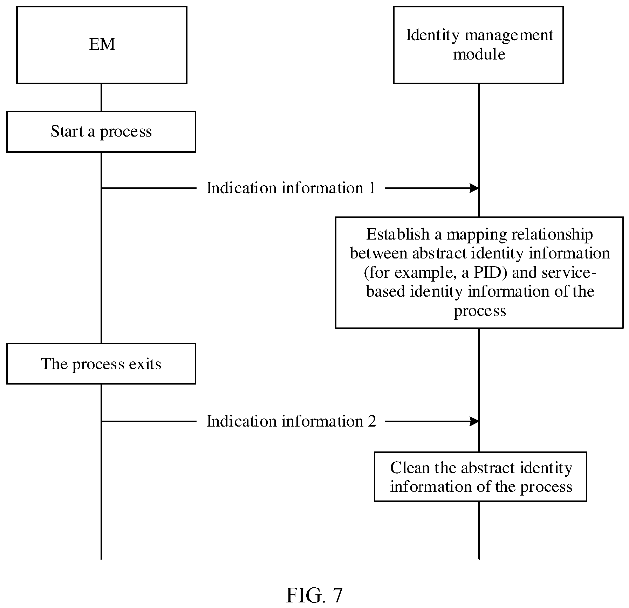

FIG. 7 is a diagram of calling service-based identity information stored in an identity management module according to an embodiment of this application. As shown in FIG. 7, when starting a process, the EM sets the abstract identity information of the process in the kernel through a system call. The identity management module in the kernel may establish a mapping relationship between abstract identity information and service-based identity information of the process. When the process exits, the EM can notify the identity management module to clean the identity information, to avoid resource leakage. When starting the process in FIG. 7, the EM may send indication information 1 to the identity management module. The indication information 1 indicates the identity management module to establish the mapping relationship between abstract identity information (for example, a PID) and service-based identity information (identification information of an ECU in which the process is located) of the process. For example, when receiving the indication information 1, the identity management module may establish the mapping relationship between abstract identity information and service-based identity information of the process. When the process exits, the EM may send indication information 2 to the identity management module. The indication information 2 indicates the identity management module to clean the mapping relationship between abstract identity information and service-based identity information of the process. For example, when receiving the indication information 2, the identity management module may clean the mapping relationship between abstract identity information and service-based identity information of the process.

S503: The EM controls startup of the initiator process (the application 1).

That the EM controls the startup of the application 1 may also be understood as that the EM starts the application 1.

S504: The initiator process (the application 1) indicates an IPC driver to perform IPC initialization.

That the application 1 indicates an IPC driver to perform IPC initialization may also be understood as that the application 1 calls an IPC initialization interface. As shown in FIG. 6, an IPC driver handle (IPC handle) is a return value of initialization of the IPC driver.

S505: The IPC driver receives an IPC initialization indication, and allocates a notification memory block to the initiator process (the application 1).

The notification memory block may be the first memory in the method 400.

In an embodiment, the notification memory block may include an identity data memory, where the identity data memory may be used to carry identity information of the application 1.

In an embodiment, the notification memory block may include a memory used to carry payload data and the identity data memory.

S506: The IPC driver obtains identity information of the initiator process (the application 1) from the identity management module, and fills the identity information into the identity data memory.

After the identity management module establishes the mapping relationship of the identity information with the EM, the kernel has a capability of obtaining the abstract identity information of the process. When the IPC initialization occurs, the IPC driver may obtain service-based identity information of the application 1 from the identity management module, and bind the IPC handle to the service-based identity information of the application 1.

Because both the IPC driver and the identity management module are in the kernel, the identity management module may obtain abstract identity information (for example, a PID) of the application 1 by using a task control block (task control block, TCB) of the application 1, and further obtain the service-based identity information that is of the application 1 and that is injected by the EM based on the mapping relationship between the abstract identity information and the service-based identity information. The service-based identity information may be filled into the identity data memory by an IPC driver module.

S507: The IPC driver performs memory mapping for the transmitter process (the application 1) and the receiver process (the application 2) to obtain the shared memory, and records mapping information in IPC description blocks (notification blocks) of two communication ends.

In an embodiment, because the identity data memory is mapped by the IPC driver for processes at the two ends, by controlling a virtual address page table of mapping, the IPC driver may control visibility of the processes at the two ends to the identity data memory.

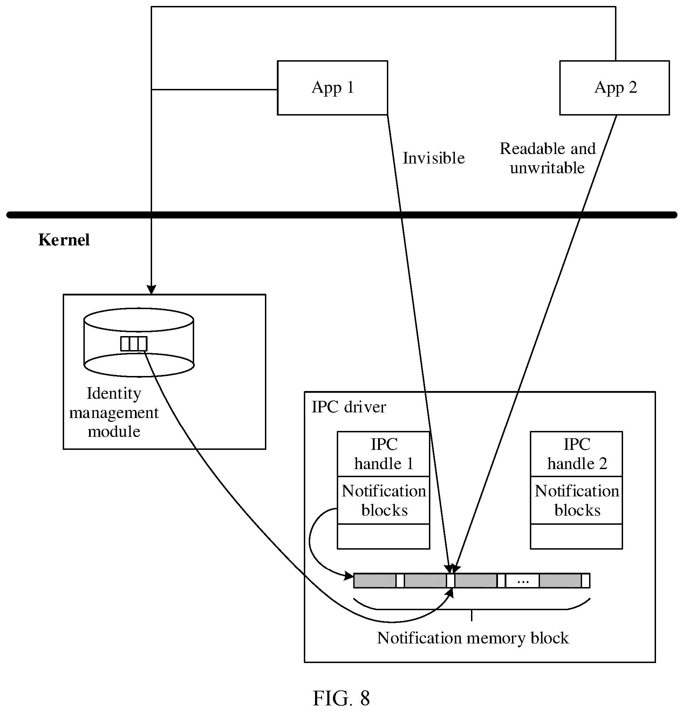

For example, FIG. 8 is a diagram in which the IPC driver controls the visibility of the processes at the two ends to the identity data memory according to an embodiment of this application. As shown in FIG. 8, the initiator process (the application 1) is invisible to the identity data memory, and the receiver process (the application 2) is readable and unwritable to the identity data memory.

In an embodiment, the IPC driver may control visibility of processes at two ends to the identity data memory by setting attribute information of the virtual address page table.

For example, the IPC driver may control, by setting the attribute information of the virtual address page table, the application 1 to be invisible to the identity data memory and the application 2 to be readable and unwritable to the identity data memory.

In this embodiment of this application, because security of the identity mechanism is high, a strict unidirectional zero trust model can be implemented between two communication ends. The receiver process may have zero trust in the initiator process, and the receiver process may securely and efficiently obtain the identity information of the initiator process.

S508: The initiator process (the application 1) writes payload data into the shared memory.

In an embodiment, after the notification memory block is mapped from the kernel to the user mode, the shared memory may be obtained. The initiator process (the application 1) writes the payload data into the memory that is in the shared memory and that is used to carry the payload data.

In an embodiment, the payload data may include information that indicates a memory address of the data.

S509: The initiator process (the application 1) sends a notification to the receiver process (the application 2) by using a kernel synchronization mechanism.

For example, the kernel synchronization mechanism includes a Futex mechanism.

It should be understood that for a process in which the initiator process sends the notification to the receiver process by using the kernel synchronization mechanism, refer to an implementation in the conventional technology. This is not specifically limited in embodiments of this application.

S510: The receiver process (the application 2) reads the payload data and the identity information of the transmitter process (the application 1) by using the shared memory.

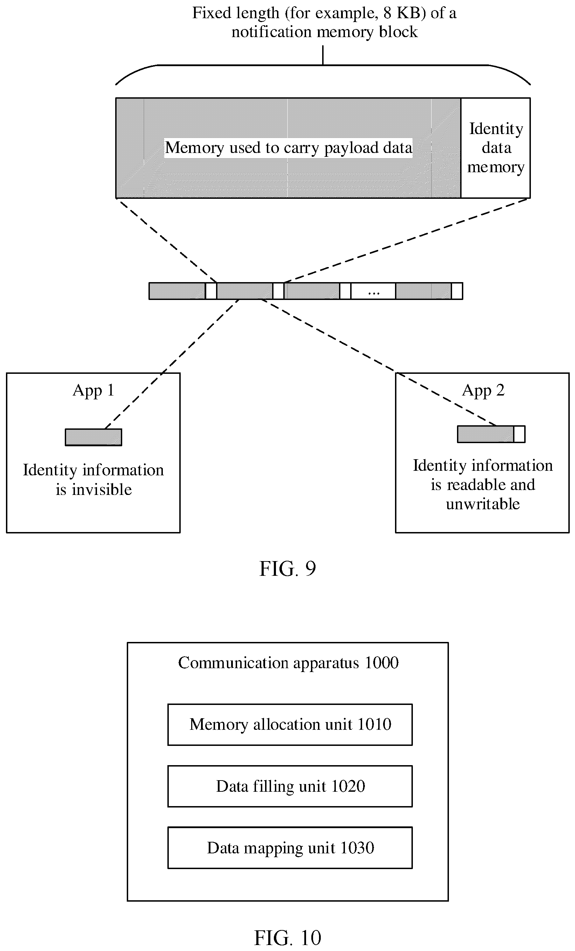

FIG. 9 is a diagram in which a receiver process obtains identity information of an initiator process based on a pointer address offset according to an embodiment of this application. When performing memory mapping, an IPC driver may determine that virtual addresses of an entire notification memory block sequence are consecutive. In this way, the receiver process may simply access an identity data memory based on the pointer address offset, to obtain the identity information of the initiator process.

For example, as shown in FIG. 9, the notification memory block may have a fixed length (for example, 8 KB), where a length of a memory used to carry payload data may be 6 KB, and a length of the identity data memory may be 2 KB.

In this embodiment of this application, the memory used to carry the payload data may be decoupled from the identity data memory, so that a fixed length of the identity data memory can be implemented, and zero copy is implemented for the payload data in an entire process.

The memory used to carry the payload data and the identity data memory are allocated at a time during IPC initialization, and the identity data memory is filled at a time during allocation. The receiver process does not need to be trapped in the kernel again to obtain the identity information of the initiator process, to reduce impact of an identity transfer mechanism on communication performance in an entire communication process.

In an embodiment, the receiver process (the application 2) may verify an access permission of the initiator process based on a middleware access control mechanism and identity information that is of the initiator process (the application 1) and that is obtained from the shared memory.

In an embodiment, when the access permission permits, the receiver process (the application 2) may obtain the payload data in the shared memory. The receiver process (the application 2) may further access a data memory based on a memory address of data indicated in the payload data.

In this embodiment of this application, the shared memory is mapped by a kernel to a user-space process for use. After the receiver process is notified to wake up, the identity information of the initiator process may be obtained by using the shared memory. In this way, the receiver process does not need to be trapped into the kernel again to obtain the identity information of the transmitter process. This helps reduce an inter-process communication delay, and also helps improve communication efficiency and certainty.

An embodiment of this application further provides an apparatus configured to implement any one of the foregoing methods. For example, an apparatus includes units (or means) configured to implement the steps performed by an intelligent driving device or a computing platform in any one of the foregoing methods.

FIG. 10 is a block diagram of a communication apparatus 1000 according to an embodiment of this application. As shown in FIG. 10, the communication apparatus 1000 includes:
a memory allocation unit 1010, configured to allocate, in a kernel, a first memory to a first process, where the first memory includes a memory used to carry identity information of the first process;
a data filling unit 1020, configured to fill the identity information of the first process into the first memory; and
a data mapping unit 1030, configured to map the first memory to obtain a shared memory, so that a second process obtains the identity information of the first process by using the shared memory.

Optionally, the identity information of the first process includes service-based identity information of the first process.

Optionally, the kernel stores a mapping relationship between the abstract identity information of the first process and the service-based identity information of the first process. The apparatus 1000 further includes: an obtaining unit, configured to obtain the abstract identity information of the first process; and a determining unit, configured to determine the service-based identity information of the first process based on the abstract identity information of the first process and the mapping relationship.

Optionally, the apparatus 1000 further includes a data cleaning unit, configured to clean the mapping relationship when the first process exits.

Optionally, the apparatus 1000 further includes: a control unit, configured to control visibility of the first process and the second process to the first memory based on attribute information of a virtual address page table.

Optionally, the control unit is configured to control, based on the attribute information of the virtual address page table, the first process to be invisible to the first memory and the second process to be readable and unwritable to the first memory.

Optionally, the first memory further includes a memory used to carry payload data of the first process. The data filling unit 1020 is further configured to fill the payload data in the shared memory, so that the second process obtains the payload data by using the shared memory.

Optionally, the second process obtains the identity information of the first process based on a pointer address offset.

For example, the memory allocation unit 1010 may be the computing platform in FIG. 1 or a processing circuit, a processor, or a controller on the computing platform. For example, the memory allocation unit 1010 is a processor 121 on the computing platform, and the processor 121 may allocate, in a kernel, the first memory to the first process.

For another example, the data filling unit 1020 may be the computing platform in FIG. 1 or the processing circuit, the processor, or the controller on the computing platform. For example, the data filling unit 1020 is the processor 122 on the computing platform. The processor 122 may fill the identity information of the first process in the first memory allocated by the processor 121 in the kernel.

For another example, the data mapping unit 1030 may be the computing platform in FIG. 1 or a processing circuit, a processor, or a controller on the computing platform. For example, the data mapping unit 1030 is a processor 12n on the computing platform. The processor 12n may map the first memory to obtain a shared memory, so that a second process obtains the identity information of the first process by using the shared memory. For example, the processor 12n may map a first memory of a kernel mode to a user mode, so that the second process obtains the identity information of the first process by using the shared memory mapped to the user mode.

The functions implemented by the memory allocation unit 1010, the functions implemented by the data filling unit 1020, and the functions implemented by the data mapping unit 1030 may be separately implemented by different processors, or some functions may be implemented by a same processor; or all functions may be implemented by a same processor. This is not limited in this embodiment of this application.

It should be understood that unit division of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All units of the foregoing apparatuses may be implemented in a form of software invoked by the processor, or all units may be implemented in a form of a hardware circuit, or some units may be implemented in a form of software invoked by the processor, and a remaining part may be implemented in a form of a hardware circuit.

In this embodiment of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of an SOC. The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in an intelligent driving device, the processing unit may be the processors 121 to 12n shown in FIG. 1.

An embodiment of this application further provides an intelligent driving device. The intelligent driving device may include the foregoing communication apparatus 1000.

Optionally, the intelligent driving device may be a vehicle.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
allocating, in a kernel, a first memory to a first process, wherein the first memory comprises a memory used to carry identity information of the first process;
filling the identity information of the first process into the first memory; and
mapping the first memory to obtain a shared memory, so that a second process obtains the identity information of the first process by using the shared memory.

2. The method according to claim 1, wherein the identity information of the first process comprises service-based identity information of the first process.

3. The method according to claim 2, wherein the kernel stores a mapping relationship between abstract identity information of the first process and the service-based identity information of the first process, and the method further comprises:
obtaining the abstract identity information of the first process; and
determining the service-based identity information of the first process based on the abstract identity information of the first process and the mapping relationship.

4. The method according to claim 3, wherein the method further comprises:
cleaning the mapping relationship when the first process exits.

5. The method according to any one of claims 1 to 4, wherein the method further comprises:
controlling visibility of the first process and the second process to the first memory based on attribute information of a virtual address page table.

6. The method according to claim 5, wherein the controlling visibility of the first process and the second process to the first memory based on attribute information of a virtual address page table comprises:
controlling, based on the attribute information of the virtual address page table, the first process to be invisible to the first memory and the second process to be readable and unwritable to the first memory.

7. The method according to any one of claims 1 to 6, wherein the first memory further comprises a memory used to carry payload data of the first process, and the method further comprises:
filling the payload data in the shared memory, so that the second process obtains the payload data by using the shared memory.

8. The method according to any one of claims 1 to 7, wherein the second process obtains the identity information of the first process based on a pointer address offset.

9. A communication apparatus, comprising:
a memory allocation unit, configured to allocate, in a kernel, a first memory to a first process, wherein the first memory comprises a memory used to carry identity information of the first process;
a data filling unit, configured to fill the identity information of the first process into the first memory; and
a data mapping unit, configured to map the first memory to obtain a shared memory, so that a second process obtains the identity information of the first process by using the shared memory.

10. The apparatus according to claim 9, wherein the identity information of the first process comprises service-based identity information of the first process.

11. The apparatus according to claim 10, wherein the kernel stores a mapping relationship between abstract identity information of the first process and the service-based identity information of the first process, and the apparatus further comprises:
an obtaining unit, configured to obtain the abstract identity information of the first process; and
a determining unit, configured to determine the service-based identity information of the first process based on the abstract identity information of the first process and the mapping relationship.

12. The apparatus according to claim 11, wherein the apparatus further comprises:
a data cleaning unit, configured to clean the mapping relationship when the first process exits.

13. The apparatus according to any one of claims 9 to 12, wherein the apparatus further comprises:
a control unit, configured to control visibility of the first process and the second process to the first memory based on attribute information of a virtual address page table.

14. The apparatus according to claim 13, wherein the control unit is configured to:
control, based on the attribute information of the virtual address page table, the first process to be invisible to the first memory and the second process to be readable and unwritable to the first memory.

15. The apparatus according to any one of claims 9 to 14, wherein the first memory further comprises a memory used to carry payload data of the first process, and the data filling unit is further configured to:
fill the payload data in the shared memory, so that the second process obtains the payload data by using the shared memory.

16. The apparatus according to any one of claims 9 to 15, wherein the second process obtains the identity information of the first process based on a pointer address offset.

17. A communication apparatus, comprising:
a memory, configured to store a computer program; and
a processor, configured to execute the computer program stored in the memory, to enable the apparatus to perform the method according to any one of claims 1 to 8.

18. An intelligent driving device, comprising the apparatus according to any one of claims 9 to 17.

19. The intelligent driving device according to claim 18, wherein the intelligent driving device is a vehicle.

20. A computer-readable storage medium, wherein the computer-readable storage medium stores a computer program, and when the computer program is executed by a computer, the method according to any one of claims 1 to 8 is implemented.

21. A chip, comprising a circuit, wherein the circuit is configured to perform the method according to any one of claims 1 to 8.
